# EUROPEAN PATENT APPLICATION

(11) **EP 4 297 147 A2**
(43) Date of publication of application: **27.12.2023**
(21) Application number: 22756454.9
(22) Date of filing: 15.02.2022
(51) Int. Cl.: H01M 10/52, H01M 4/62, H01M 10/42, H01M 10/058, H01M 10/052

(54) **ADDITIVE, CONTAINING MAGNESIUM SILICATE, FOR SECONDARY BATTERY ELECTROLYTE AND PREPARATION METHOD THEREFOR**

(30) Priority: 17.02.2021 KR 20210021389
(71) Applicant: Giant Chemical Co., Ltd, Yangsan-si Gyeongsangnam-do 50567 (KR)
(72) Inventor: SEONG, Dong Min, Ulsan 44727 (KR); KIM, Dong Hyun, Busan 46927 (KR); KANG, Dong Gyun, Yangsan-si Gyeongsangnam-do 50567 (KR); KIM, Dae Uk, Ulsan 44784 (KR); KANG, Jin Kyu, Ulsan 44784 (KR); HAN, Seung Yun, Ulsan 44784 (KR)
(74) Representative: Gulde & Partner
(86) International application number: PCT/KR2022/002195
(87) International publication number: WO 2022/177256

(57) **Abstract**

The present invention relates to an additive, containing magnesium silicate, for a secondary battery electrolyte and a preparation method therefor and, more specifically, to an additive, containing magnesium silicate, for a secondary battery electrolyte and a preparation method therefor, wherein the additive can reversibly improve the absorption and release of lithium ions in a secondary battery electrode and promote the formation of a solid-electrolyte interphase (SEI), while not affecting charge and discharge capacity by suppressing electrochemical side reactions.

## Description

### TECHNICAL FIELD

The present invention relates to an additive, containing magnesium silicate, for secondary battery electrolyte and a preparation method therefor and, more specifically, to an additive, containing magnesium silicate, for secondary battery electrolyte and a preparation method therefor, wherein the additive can reversibly improve the absorption and release of lithium ions in a secondary battery electrode and promote the formation of a solid-electrolyte interphase (SEI), while not affecting charge and discharge capacity by suppressing electrochemical side reactions.

### BACKGROUND ART

Nanoporous materials having large specific surface area and uniform pores are widely used as adsorbents, catalyst supports, separation and purification processes, and ion exchange media. In particular, synthesis of novel nanostructured materials having controlled porosity has been continuously studied in the field of new materials.

Among them, magnesium silicate, a porous inorganic chemical compound synthesized by precipitation reaction of water soluble magnesium salts and sodium silicate, can be used for industrial purposes and food purification and in such fields as cosmetic raw materials.

According to most of the silica and silicate-related reports to date, silica and silicate have been synthesized by using tetraethyl orthosilicate (TEOS) as a silica precursor. Due to its high reactivity, TEOS allows for synthesis of silica according to pH and has a great advantage that high-purity inorganic compounds can be synthesized due to its low impurity content. However, the high unit price of TEOS makes it difficult to secure price competitiveness in the global market.

The shape, particle size, and surface properties of the particles of silicate-based inorganic compounds may be controlled by controlling various variables (pH, surfactant, temperature, concentration, etc.) by using a sol-gel synthesis method, but few studies have been performed to investigate the exact mechanism thereof. In addition, the difficulties in controlling conditions due to the particle size and the wide pH range of magnesium silicate have limited the development of magnesium silicate to the control of the porosity.

Meanwhile, lithium secondary batteries are used in a high voltage range after undergoing high voltage activation to increase energy density. At high voltage, an active material and an electrolyte cause side reactions, which deteriorates the degradation of battery performance, and an active material is eluted into an electrolyte during charging and discharging, ultimately causing degeneration of the battery.

To alleviate these disadvantages, electrolyte additives are used to protect a cathode, which are oxidized earlier than other electrolytes to form a protective film on the surface of a cathode during charging of a lithium secondary battery. However, the existing additives, most of which are made of organic compounds, are not eco-friendly, and they fail to suppress the deterioration of battery performance to a satisfactory level, hindering the development of high-performance (high-output) lithium secondary batteries.

Therefore, to overcome the problems described above, having recognized that there is an urgent need for developing an electrolyte additive for lithium secondary batteries to develop lithium secondary batteries having improved capacity degradation properties and improved life stability in a high voltage cycle, the present inventors completed the present invention.

### DETAILED DESCRIPTION OF THE INVENTION

### TECHNICAL PROBLEM

A purpose of the present invention is to provide an additive for secondary battery electrolyte, containing magnesium silicate, wherein the additive can reversibly improve the absorption and release of lithium ions in a secondary battery electrode and promote the formation of a solid-electrolyte interphase (SEI), while not affecting charge and discharge capacity by suppressing electrochemical side reactions.

Another purpose of the present invention is to provide a preparation method of an additive for secondary battery electrolyte, containing magnesium silicate, wherein the additive can reversibly improve the absorption and release of lithium ions in a secondary battery electrode and promote the formation of a solid-electrolyte interphase (SEI), while not affecting charge and discharge capacity by suppressing electrochemical side reactions.

The technical problems to be solved by the present invention are not limited to the technical problems mentioned above, and other technical problems that are not mentioned can be clearly understood by those skilled in the art from the description of the present invention.

### TECHNICAL SOLUTION

To achieve the purposes described above, the present invention provides a preparation method of an additive for secondary battery electrolyte, containing magnesium silicate.

Hereinafter, this specification will be described in more detail.

The present invention provides an additive for secondary battery electrolyte, containing magnesium silicate.

In the present invention, the magnesium silicate is characterized in that it has a particle size of 50 nm to 800 nm.

In the present invention, the magnesium silicate is characterized in that it has a mass ratio of 50 to 70 wt% of oxygen (O), 5 to 20 wt% of magnesium (Al), and 15 to 35 wt% of silicon (Si) .

In the present invention, the magnesium silicate is characterized in that it has a surface area of 50 to 500 m²/g.

In the present invention, the magnesium silicate is characterized in that it has a pore size of 0.1 to 20 nm.

In addition, the present invention provides a preparation method of an additive for secondary battery electrolyte, containing magnesium silicate, characterized in that it comprises the steps described below:
(A1) preparing a silicate precursor;
(A2) preparing a mixture by mixing a magnesium precursor and an ammonium salt; and
(A3) preparing an additive for secondary battery electrolyte, containing magnesium silicate, by adding the silicate precursor to the mixture.

In the present invention, the step (A1) is characterized in that it consists of the steps described below:
(A1a) preparing a mixed solution by mixing alcohol, water, and ammonia-water (NH₃H₂O); and
(A1b) preparing a silicate precursor having nano-sized particles by adding tetraethyl orthosilicate (TEOS) to the mixed solution.

In the present invention, the step (A3) is characterized in that it consists of the steps described below:
(A3a) adding the silicate precursor to the mixture;
(A3b) heating the mixture to which the silicate precursor is added at 100 to 200°C; and
(A3c) preparing an additive for secondary battery electrolyte, containing magnesium silicate, by filtering the heated mixture.

In addition, the present invention provides a secondary battery electrolyte comprising an additive for secondary battery electrolyte, containing the magnesium silicate.

In the present invention, the secondary battery electrolyte is characterized in that it comprises the additive for secondary battery electrolyte in an amount of 0.1 to 2.0% by weight based on the total weight% of the secondary battery electrolyte.

In addition, the present invention provides a secondary battery characterized in that it comprises the secondary battery electrolyte.

All matters mentioned about the additive for secondary battery electrolyte, containing the magnesium silicate, the preparation method therefor, the secondary battery electrolyte comprising the same, and the secondary battery comprising the secondary battery electrolyte are equally applied unless they are contradictory with each other.

### ADVANTAGEOUS EFFECTS

The additive for secondary battery electrolyte, containing the magnesium silicate, and the preparation method therefor of the present invention can reversibly improve the absorption and release of lithium ions in a secondary battery electrode and promote the formation of a solid-electrolyte interphase (SEI), while not affecting charge and discharge capacity by suppressing electrochemical side reactions.

The effects of the present invention are not limited to the effects mentioned above, and other effects that are not mentioned will be clearly understood by those skilled in the art from the recitations of the claims.

### DESCRIPTION OF THE DRAWINGS

FIG. 1 is a scanning electron microscope (SEM) image confirming the particle size of the magnesium silicate for the secondary battery additive according to the present invention.
FIG. 2 is a dynamic light scattering (DLS) image confirming the average particle size of the magnesium silicate for the secondary battery additive according to the present invention.
FIG. 3 is an energy dispersive X-ray spectroscopy (EDS) image confirming the composition of the magnesium silicate for the secondary battery additive according to the present invention.
FIG. 4 is a graph confirming the specific surface area of the magnesium silicate for the secondary battery additive according to the present invention and the pore size present on the surface of the magnesium silicate.
FIG. 5 is a galvanostatic charge-discharge cycle confirming whether the application of the magnesium silicate according to the present invention as an additive affects an anode of a secondary battery.
FIG. 6 is an electrochemical impedance spectroscopy (EIS) graph confirming whether the application of the magnesium silicate according to the present invention as an additive affects an anode of a secondary battery.
FIG. 7 is a graph of discharge capacity retention characteristics that change as the charge-discharge cycle proceeds, confirming whether the application of the magnesium silicate according to the present invention as an additive affects an anode of a secondary battery.
FIG. 8 is a galvanostatic charge-discharge cycle confirming whether the application of the magnesium silicate according to the present invention as an additive affects a cathode of a secondary battery.
FIG. 9 is an electrochemical impedance spectroscopy (EIS) graph confirming whether the application of the magnesium silicate according to the present invention as an additive affects a cathode of a secondary battery.
FIG. 10 is a graph of discharge capacity retention characteristics that change as the charge-discharge cycle proceeds, confirming whether the application of the magnesium silicate according to the present invention as an additive affects a cathode of a secondary battery.

### BEST MODE

The terms used in this specification have been selected from general terms that are currently widely used as much as possible while considering the functions in the present invention, but they may vary depending on the intention of one of ordinary skill in the art or a precedent, the emergence of new technologies, and the like. In addition, in a specific case, there is also a term arbitrarily selected by the applicant, and in this case, the meaning will be described in detail in the detailed description of the invention. Therefore, the terms used in the present invention should be defined based on the meaning of the terms and the overall content of the present invention, not simply the title of the terms.

Unless defined otherwise, all terms used herein, including technical or scientific terms, have the same meaning as commonly understood by one of ordinary skill in the art to which the present invention belongs. Terms such as those defined in commonly used dictionaries should be interpreted as having a meaning consistent with the meaning in the context of the related art, and unless explicitly defined in the present application, they should not be interpreted in an ideal or excessively formal meaning.

Numerical ranges include the values defined therein. Every maximum numerical limitation given throughout this specification includes every lower numerical limitation, as if such lower numerical limitations were explicitly written. Every minimum numerical limitation given throughout this specification includes every higher numerical limitation, as if such higher numerical limitations were explicitly written. Every numerical limitation given throughout this specification will include every better numerical range within the broader numerical range, as if the narrower numerical limitations were explicitly written.

Hereinafter, embodiments of the present invention will be described in detail, but it is obvious that the present invention is not limited by the following embodiments.

### Additive for secondary battery electrolyte, containing magnesium silicate, and preparation method therefor

The present invention provides an additive for secondary battery electrolyte, containing magnesium silicate.

The magnesium silicate may have a particle size of 50 nm to 800 nm. The magnesium silicate can present in a nano size.

The magnesium silicate may consist of a mass ratio of 50 to 70 wt% of oxygen (O), 5 to 20 wt% of magnesium (Al), and 15 to 35 wt% of silicon (Si), preferably, in a mass ratio of 55 to 65 wt% of oxygen (O), 10 to 15 wt% of magnesium (Al), and 20 to 30 wt% of silicon (Si).

The magnesium silicate may have a specific surface area of 50 to 500 m²/g, preferably, a specific surface area of 100 to 450 m²/g, and most preferably, a specific surface area of 120 to 420 m²/g.

The magnesium silicate may have a pore size of 0.1 to 20 nm, preferably, a pore size of 0.5 to 15 nm, and most preferably, a pore size of 1.0 to 13 nm.

In addition, the present invention provides a preparation method of an additive for secondary battery electrolyte, containing magnesium silicate, the preparation method comprising the steps described below:
(A1) preparing a silicate precursor;
(A2) preparing a mixture by mixing a magnesium precursor and an ammonium salt; and
(A3) preparing an additive for secondary battery electrolyte, containing magnesium silicate, by adding the silicate precursor to the mixture.

The step (A1), which is a step of preparing a silicate precursor, may consist of the steps described below:
(A1a) preparing a mixed solution by mixing alcohol, water, and ammonia-water (NH₃H₂O); and
(A1b) preparing a silicate precursor having nano-sized particles by adding tetraethyl orthosilicate (TEOS) to the mixed solution.

The alcohol may be a C1 to C4 low alcohol, for example, methanol, ethanol, propanol or n-butanol.

The silicate precursor may be one or more selected from the group consisting of silica (SiO₂), sodium silicate, tetramethyl orthosilicate, tetraethyl orthosilicate, tetrapropyl orthosilicate, triethoxyethylsilane (TEES), and 1,2-bistriethoxysilylethane, preferably, one or more selected from the group consisting of silica (SiO₂), sodium silicate, tetramethyl orthosilicate, tetraethyl orthosilicate, tetrapropyl orthosilicate, triethoxyethylsilane, and 1,2-bistriethoxysilylethane having nano-sized particles.

The silicate precursor prepared by the step (A1) may be a silicate precursor having nano-sized particles.

The step (A2) may be a step of preparing a mixture by mixing a magnesium precursor and an ammonium salt.

The magnesium precursor may be one or more selected from the group consisting of magnesium nitrate, magnesium sulfate, and magnesium chloride, and a single precursor or a mixed precursor may be used as the magnesium precursor.

The ammonium salt is characterized in that one or more selected from the group consisting of ammonium chloride (NH₄Cl), ammonium nitrate (NH₄NO₃), and ammonium sulfate ((NH₄)₂SO₄).

The ammonium salt added in the step (A2) is to suppress side reactions of the magnesium precursor and induce a reaction between magnesium ions and silicate ions to prepare magnesium silicate of a uniformly spherical shape.

After the step (A2), ammonia-water (NH₄OH) may be further added to the mixture of the magnesium precursor and the ammonium salt.

The step (A3), which is a step of preparing an additive for secondary battery electrolyte according to the present invention, containing magnesium silicate, by adding the silicate additive to the mixture, may consist of the steps described below:
(A3a) adding the silicate precursor to the mixture;
(A3b) heating the mixture to which the silicate precursor is added at 100 to 200°C;
(A3c) preparing an additive for secondary battery electrolyte, containing magnesium silicate, by filtering the completely heated mixture.

The step (A3a) is a step of adding the silicate precursor to the mixture, and more specifically, it may be a step of dispersing the silicate precursor in water (H₂O) and adding the solution in which the silicate precursor is dispersed to the mixture.

After completing the step (A3a), the mixture may be mixed while being stirred until it becomes homogeneous.

The step (A3b) is a step of heating the mixture to which the silicate precursor is added at 100 to 200°C; more specifically, it may be a step of transferring to an autoclave the mixture to which the silicate precursor is added and subjecting the same to a reaction at 100 to 200°C for 1 to 36 hours.

The step (A3c) may be a step of preparing an additive for secondary battery electrolyte according to the present invention, containing magnesium silicate, by filtering the completely heated mixture. More specifically, it may be a step of cooling the completely heated mixture to normal temperature or room temperature, filtering magnesium silicate produced by the reaction, washing the same, and drying at 50 to 150°C to prepare an additive for secondary battery electrolyte according to the present invention, containing magnesium silicate.

### Secondary battery electrolyte containing an additive for secondary battery electrolyte, containing magnesium silicate, and secondary battery containing the same

The present invention provides a secondary battery electrolyte comprising an additive for secondary battery electrolyte, containing the magnesium silicate.

The secondary battery electrolyte may comprise the additive for secondary battery electrolyte in an amount of 0.1 to 2.0% by weight based on the total weight% of the secondary battery electrolyte.

In addition, the present invention provides a secondary battery comprising the secondary battery electrolyte.

The secondary battery can extend the lifetime of a secondary battery and improve its efficiency by suppressing side reactions and electrolyte decomposition occurring at a secondary battery electrode by comprising the secondary battery electrolyte in an optimal weight.

Advantages and features of the present invention, and methods of achieving them, will become clear with reference to the embodiments described below in detail. However, the present invention is not limited to the embodiments disclosed below, but may be implemented in various different forms. The embodiments are provided only for making the disclosure of the present invention complete and fully informing to one of ordinary skill in the art the scope of the invention, and the and the present invention is only defined by the scope of the claims.

### Example 1. Preparation of magnesium silicate for secondary battery additive

### 1.1. Preparation of silicate precursor

For the preparation of a magnesium silicate having nano-sized particles, spherical nano silica (SiO₂) was prepared as a silicate precursor having nano-sized particles according to the Stober process.

More specifically, ethanol, distilled water, and ammonia-water (NH₃H₂O) were homogeneously mixed, and tetraethyl orthosilicate (TEOS) was injected into the mixture, and the resulting mixture was stirred at 250 rpm for 2 hours at normal temperature. A solid layer was separated from the completely stirred mixture by using a high-speed centrifuge, washed with distilled water and ethanol, and then dried at 80°C to prepare nano silica (SiO₂), which is a silicate precursor.

### 1.2. Preparation of magnesium silicate for secondary battery additive

Magnesium chloride (MgCl₂, 0.75 mmol) and ammonium chloride (NH₄Cl, 10 mmol) were dissolved in distilled water (30 mL), and then 28% ammonia-water (NH₄OH, 1 mL) was added and mixed to prepare a mixture. Then, the sodium silicate (0.1 g) having nano-sized particles, prepared above, was dispersed in distilled water (20 mL), and the resulting dispersion was added to the mixture above and mixed until the resulting mixture became homogeneous. The completely mixed solution was transferred to an autoclave and subjected to a reaction at 140°C for 12 hours to release Si ions of spherical silica (SiO₂), which is a silicate precursor, and a reaction for the interaction between the released Si ions and magnesium ions was carried out. Then, after cooling the reactant to normal temperature, the magnesium silicate produced from the reaction was filtered, washed with distilled water, and dried in a dryer at 100°C to prepare a magnesium silicate for a secondary battery additive according to the present invention.

### Example 2. Electrolyte 1 for secondary battery, containing magnesium silicate as an additive

Ethylene carbonate (EC) and diethyl carbonate (DEC) were mixed at a weight ratio of 1:1, and the resulting mixture was mixed with LiPF₆ to prepare a liquid electrolyte LiPF₆-EC/DEC. The magnesium silicate prepared in Example 1 above was mixed in an amount of 0.003 g (0.3 wt% of the total weight of the liquid electrolyte) to 1 g of the liquid electrolyte (LiPF₆-EC/DEC) to prepare Electrolyte 1 for secondary battery, containing magnesium silicate, according to the present invention.

### Example 3. Electrolyte 2 for secondary battery, containing magnesium silicate as an additive

The magnesium silicate prepared in Example 1 above was mixed in an amount of 0.01 g (1.0 wt% of the total weight of the liquid electrolyte) to 1 g of the liquid electrolyte (LiPF₆-EC/DEC) prepared in Example 2 above to prepare Electrolyte 2 for secondary battery, containing magnesium silicate, according to the present invention.

### Comparative Example 1. Comparative Electrolyte 1 for secondary battery, not containing magnesium silicate as an additive

Ethylene carbonate (EC) and diethyl carbonate (DEC) were mixed at a weight ratio of 1:1, and the resulting mixture was mixed with LiPF₆ to prepare Comparative Electrolyte 1 for secondary battery consisting of a liquid electrolyte LiPF₆-EC/DEC.

### Comparative Example 2. Comparative Electrolyte 2 for secondary battery, containing magnesium silicate as an additive

The magnesium silicate prepared in Example 1 above was mixed in an amount of 0.03 g (3.0 wt% of the total weight of the liquid electrolyte) to 1 g of the liquid electrolyte LiPF₆-EC/DEC prepared in Example 2 above to prepare Comparative Electrolyte 2 for secondary battery, containing magnesium silicate.

### Experimental Example 1. Analysis of magnesium silicate material for secondary battery additive

### 1.1. Particle size analysis of magnesium silicate

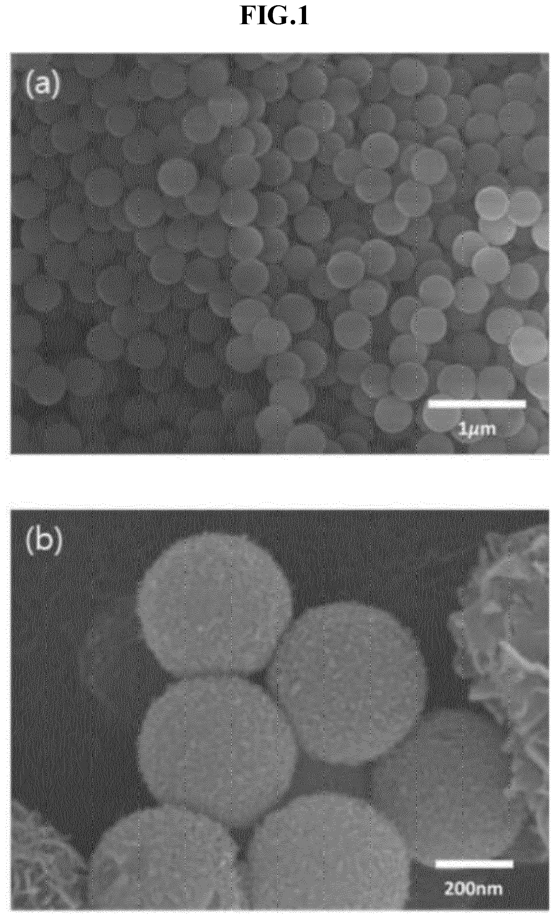

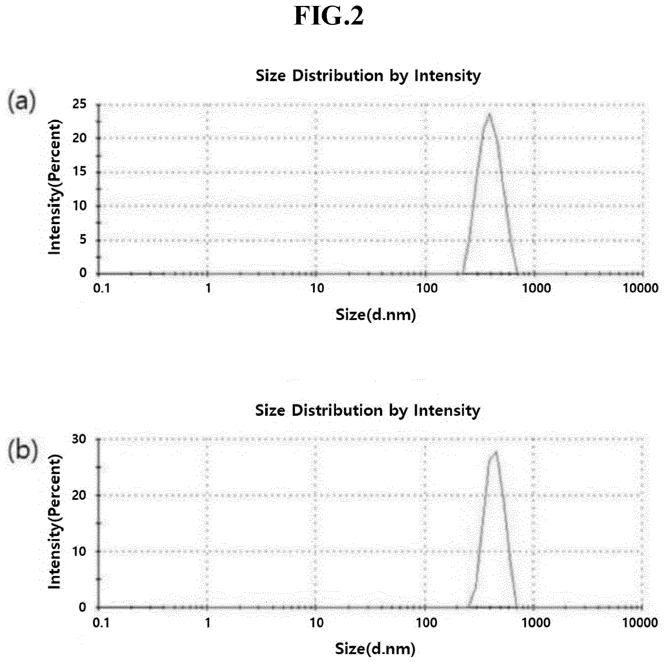

To confirm whether the particles of the magnesium silicate for secondary battery additive according to the present invention has a nano-size, scanning electron microscopy (SEM) and dynamic light scattering (DLS) were performed with the spherical silica (SiO₂), which is the silicate precursor, and the magnesium silicate for the secondary battery additive, prepared in Example 1. The results are shown in [Table 1] and FIGS. 1 and 2 below.

**[Table 1]**

| | **Average particle size measured by DLS** |
|---|---|
| **Silica (SiO₂)** | 385.6 nm |
| **Magnesium silicate for the secondary battery additive** | 429.5 nm |

Referring to [Table 1] above and FIGS. 1 and 2, it is confirmed that (a) the spherical silica, which is the silicate precursor, and (b) the magnesium silicate for the secondary battery additive, prepared in Example 1 according to the present invention, have a particle size range of 200 nm to 500 nm.

### 1.2. Composition analysis of magnesium silicate

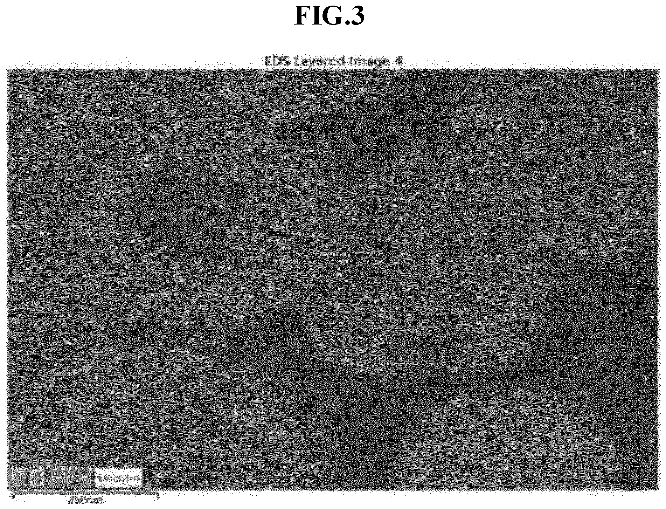

To confirm the composition of the magnesium silicate for secondary battery additive according to the present invention, the magnesium silicate for secondary battery additive prepared in Example 1 was subjected to energy dispersive X-ray spectroscopy (EDS), and the results are shown in [Table 2] and FIG. 3 below.

**[Table 2]**

| **Element** | **Composition ratio (wt%)** |
|---|---|
| Oxygen (O) | 62.06 |
| Magnesium (Mg) | 12.39 |
| Silicon (Si) | 25.39 |

Referring to [Table 2] above and FIG. 3, it can be confirmed that the magnesium silicate for secondary battery additive (Example 1) according to the present invention is a magnesium silicate consisting of oxygen, magnesium, and silicon.

### 1.3. Analysis of specific surface area and pore size of magnesium silicate

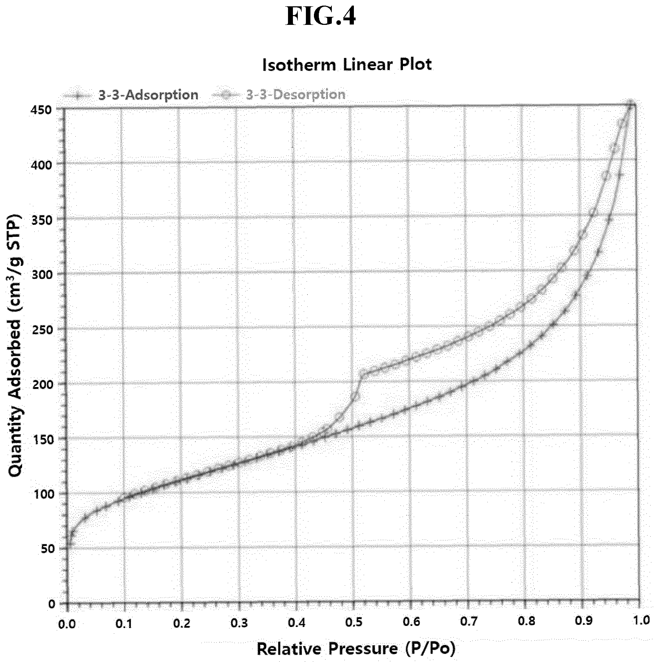

To confirm the specific surface area of the magnesium silicate for secondary battery additive according to the present invention and the pore size present on the surface of the magnesium silicate, the specific surface area and pore size of the magnesium silicate for secondary battery additive prepared in Example 1 above were measured by using a BET specific surface area measurement apparatus, and the results are shown in FIG. 4.

Referring to FIG. 4, it can be confirmed that the magnesium silicate for secondary battery additive (Example 1) according to the present invention has a surface area of 399.10 m²/g, and pores of 7.00 nm are formed on the surface of the magnesium silicate.

The results described above suggest that the magnesium silicate for secondary battery additive according to the present invention can contribute to the suppressing of electrolyte decomposition and the improving of the capacity retention rate of secondary batteries by adsorbing impurities that may occur due to the use of a secondary battery.

### Experimental Example 2. Analysis of effects of the electrolyte for secondary battery, containing magnesium silicate as an additive - Applied to anode

### 2.1. Confirmation of galvanostatic charge-discharge cycles according to additive

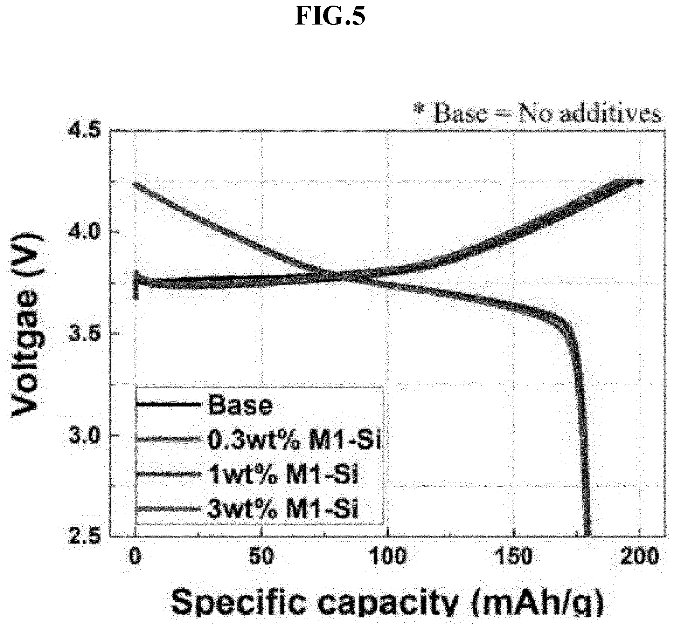

To confirm whether the application of the magnesium silicate according to the present invention as an additive affects the efficiency of a secondary battery, galvanostatic charge-discharge cycles were measured with an anode half cell (NCM622 cathode half cell) of a lithium secondary battery each comprising the electrolyte for secondary battery, containing the magnesium silicate prepared in Examples 2 and 3 above as an additive, and the comparative electrolyte for secondary battery prepared in Comparative Examples 1 and 2, and the results are shown in [Table 3] and FIG. 5 below.

**[Table 3]**

| | 1^{st} cycle charge capacity (mAh/g) | 1^{st} cycle discharge capacity (mAh/g) | I.C.E (%) |
|---|---|---|---|
| Comparative Example 1 (Baseline) | 201 | 180 | 89.6 |
| Comparative Example 2 | 194 | 179 | 92.3 |
| Example 2 | 198 | 180 | 90.9 |
| Example 3 | 197 | 179 | 90.9 |

Referring to [Table 3] above and FIG. 5, it is confirmed that in the lithium secondary battery comprising the electrolyte for secondary battery, containing the magnesium silicate (Examples 2 and 3) according to the present invention as an additive, despite the application of magnesium silicate as an electrolyte, the charge and discharge capacity and the initial Columbic efficiency (I.C.E) were not affected.

From the results described above, it can be confirmed that the magnesium silicate for secondary battery additive according to the present invention can be used as an additive for secondary battery.

### 2.3. Confirmation of electrochemical impedance spectroscopy (EIS) according to additives

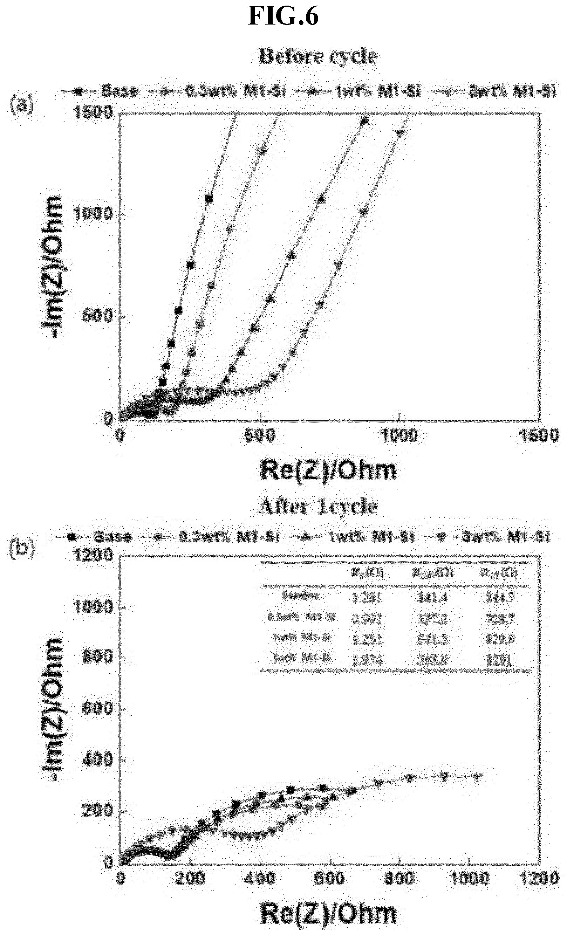

To confirm whether the application of the magnesium silicate according to the present invention as an additive affects a secondary battery, electrochemical impedance spectroscopy (EIS) was performed with an anode half cell (NCM622 cathode half cell) of a lithium secondary battery comprising the electrolyte for secondary battery, containing the magnesium silicate prepared in Examples 2 and 3 above as an additive. For comparison, electrochemical impedance spectroscopy was performed in the same manner with an anode half cell of a lithium secondary battery comprising the electrolyte for secondary battery prepared in Comparative Examples 1 and 2 above, and the results are shown in [Table 4] and FIG. 6.

**[Table 4]**

| | R_{b} (Q) | R_{SEI} (Ω) | R_{CT} (Ω) |
|---|---|---|---|
| Comparative Example 1 (Baseline) | 1.281 | 141.4 | 844.7 |
| Example 2 | 0.992 | 137.2 | 728.7 |
| Example 3 | 1.252 | 141.2 | 829.9 |
| Comparative Example 2 | 1.974 | 365.9 | 1201 |

| | | | |
|---|---|---|---|
| R_{b} (bulk resistance): Resistance of electrolyte R_{SEI} (SEI layer resistance): Resistance corresponding to charge transfer at SEI layer R_{CT} (charge transfer resistance): Electrolyte-electrode interfacial resistance | | | |

Referring to FIG. 6, it can be confirmed that when the magnesium silicate was added as an additive, the bulk resistance was definitely small and the R_{SEI} resistance was small. On the contrary, it can be confirmed that when 3 wt% of magnesium silicate was added as an additive, the R_{SEI} resistance considerably increased, indicating that high interfacial resistance was caused.

From the results described above, it can be confirmed that when the magnesium silicate for secondary battery additive according to the present invention was included in a specific amount, the R_{SEI} resistance was reduced to form a solid-electrolyte interphase (SEI) that facilitates lithium ion transfer.

### 2.3. Confirmation of charge-discharge cycles according to additive

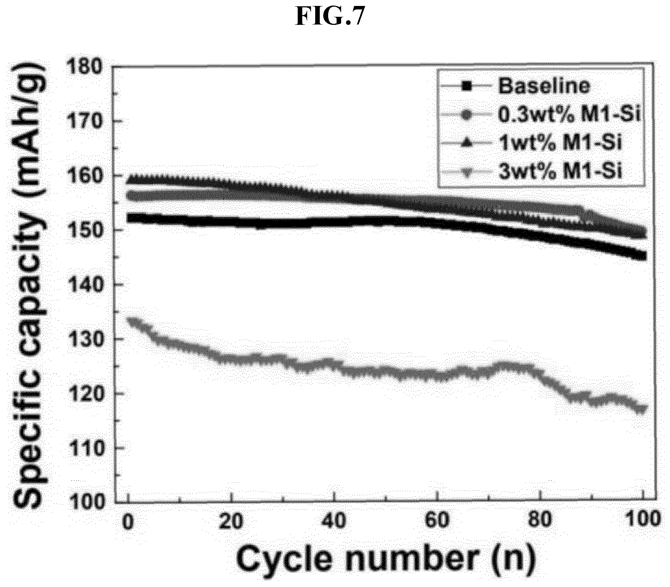

To confirm whether the application of the magnesium silicate according to the present invention as an additive affects a secondary battery, the discharge capacity retention characteristics that change as the charge-discharge cycle proceeds were confirmed with an anode half cell (NCM622 cathode half cell) of a lithium secondary battery comprising the electrolyte for secondary battery, containing the magnesium silicate prepared in Examples 2 and 3 above as an additive. For comparison, the discharge capacity retention characteristics that change as the charge-discharge cycle proceeds were confirmed with an anode half cell of a lithium secondary battery comprising the electrolyte for secondary battery prepared in Comparative Examples 1 and 2 above, and the results are shown in FIG. 7.

Referring to FIG. 7, the anode half cell of the lithium secondary battery comprising the electrolyte for secondary battery, containing the magnesium silicate prepared in Example 2 (red line) and Example 3 (blue line) as an additive exhibited a higher capacity retention rate than Comparative Example 1 (black line) that did not comprise the magnesium silicate as an additive. In particular, in the case of Comparative Example 2 (pink line), containing the magnesium silicate additive in the amount of 3 wt%, which was an excess, the cycle characteristics were significantly lowered.

From the results described above, it can be confirmed that the magnesium silicate additive according to the present invention should be added only in an optimal weight ratio.

### Experimental Example 3. Analysis of effects of the electrolyte for secondary battery, containing magnesium silicate as an additive - Applied to cathode

### 3.1. Confirmation of galvanostatic charge-discharge cycles according to additive

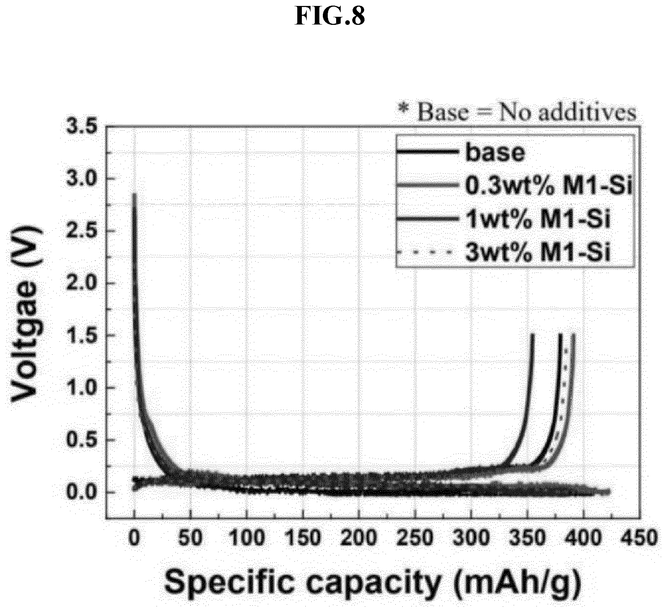

To confirm whether the application of the magnesium silicate according to the present invention as an additive affects the efficiency of a secondary battery, galvanostatic charge-discharge cycles were measured with a cathode half cell (natural graphite anode half cell) of a lithium secondary battery each comprising the electrolyte for secondary battery, containing the magnesium silicate prepared in Examples 2 and 3 above as an additive, and the comparative electrolyte for secondary battery prepared in Comparative Examples 1 and 2, and the results are shown in [Table 5] and FIG. 8 below.

**[Table 5]**

| | 1^{st} cycle charge capacity (mAh/g) | 1^{st} cycle discharge capacity (mAh/g) | I.C.E (%) |
|---|---|---|---|
| Comparative Example 1 (Baseline) | 409 | 372 | 92.7 |
| Comparative Example 2 | - | - | - |
| Example 2 | 422 | 391 | 92.7 |
| Example 3 | 385 | 355 | 92.2 |

Referring to [Table 5] above and FIG. 8, it is confirmed that in the lithium secondary battery comprising the electrolyte for secondary battery, containing the magnesium silicate (Examples 2 and 3) according to the present invention as an additive, despite the application of magnesium silicate as an electrolyte, the charge and discharge capacity and the initial Columbic efficiency (I.C.E) were not affected. However, it can be confirmed that in the case of Comparative Example 2 (green dot line) containing the magnesium silicate additive in the amount of 3 wt%, which was an excess, the cell was drastically deteriorated and thus the measurements were not obtained.

From the results described above, it can be confirmed that the magnesium silicate for secondary battery additive according to the present invention should be added only in an optimal weight ratio as an additive of secondary battery.

### 3.2. Confirmation of electrochemical impedance spectroscopy (EIS) according to additives

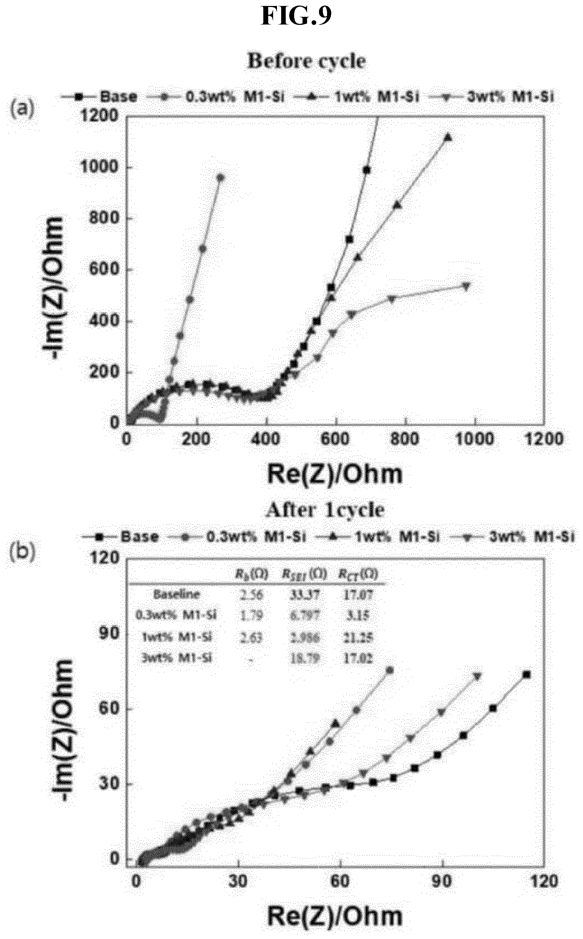

To confirm whether the application of the magnesium silicate according to the present invention as an additive affects a secondary battery, electrochemical impedance spectroscopy (EIS) was performed with a cathode half cell (natural graphite anode half cell) of a lithium secondary battery comprising the electrolyte for secondary battery, containing the magnesium silicate prepared in Examples 2 and 3 above as an additive. For comparison, electrochemical impedance spectroscopy was performed in the same manner with a cathode half cell of a lithium secondary battery comprising the comparative electrolyte for secondary battery prepared in Comparative Examples 1 and 2 above, and the results are shown in [Table 6] and FIG. 9.

**[Table 6]**

| | R_{b} (Q) | R_{SEI} (Ω) | R_{CT} (Ω) |
|---|---|---|---|
| Comparative Example 1 (Baseline) | 2.56 | 33.37 | 17.07 |
| Example 2 | 1.79 | 6.797 | 3.15 |
| Example 3 | 2.63 | 2.968 | 21.25 |
| Comparative Example 2 | - | 18.79 | 17.02 |

| | | | |
|---|---|---|---|
| R_{b} (bulk resistance): Resistance of electrolyte R_{SEI} (SEI layer resistance): Resistance corresponding to charge transfer at SEI layer R_{CT} (charge transfer resistance): Electrolyte-electrode interfacial resistance | | | |

Referring to [Table 6] above and FIG. 9, it can be confirmed that when the magnesium silicate was added as an additive, the bulk resistance was definitely small and the R_{SEI} resistance was small. On the contrary, it can be confirmed that when 3 wt% of magnesium silicate was added as an additive, the R_{SEI} resistance considerably increased.

From the results described above, it can be confirmed that when the magnesium silicate for secondary battery additive according to the present invention was included in a specific amount, the R_{SEI} resistance was reduced to form a solid-electrolyte interphase (SEI) that facilitates lithium ion transfer.

### 3.3. Confirmation of charge-discharge cycles according to additive

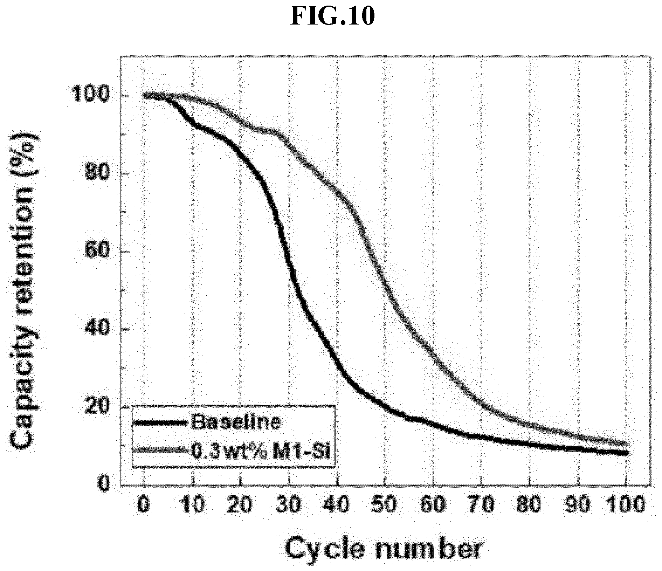

To confirm whether the application of the magnesium silicate according to the present invention as an additive affects a secondary battery, the discharge capacity retention characteristics that change as the charge-discharge cycle proceeds were confirmed with a cathode half cell (natural graphite anode half cell) of a lithium secondary battery comprising the electrolyte for secondary battery, containing the magnesium silicate prepared in Example 2 above as an additive. For comparison, the discharge capacity retention characteristics that change as the charge-discharge cycle proceeds were confirmed with an anode half cell of a lithium secondary battery comprising the electrolyte for secondary battery prepared in Comparative Example 1 above, and the results are shown in FIG. 10.

Referring to FIG. 10, the anode half cell of the lithium secondary battery comprising the electrolyte for secondary battery, containing the magnesium silicate prepared in Example 2 (red line) as an additive exhibited a higher capacity retention rate than Comparative Example 1 (black line) that did not comprise the magnesium silicate as an additive.

From the above description, those skilled in the art pertaining to the present invention will be able to understand that the present invention can be implemented in other specific forms without changing the technical principles or essential features of the present invention. In this regard, the embodiments described above are illustrative in all respects, and should be understood as non-limiting.

## Claims

1. An additive for secondary battery electrolyte, containing magnesium silicate.

2. The additive for secondary battery electrolyte according to claim 1, wherein the magnesium silicate has a particle size of 50 nm to 800 nm.

3. The additive for secondary battery electrolyte according to claim 1, wherein the magnesium silicate has a mass ratio of 50 to 70 wt% of oxygen (O), 5 to 20 wt% of magnesium (Al), and 15 to 35 wt% of silicon (Si).

4. The additive for secondary battery electrolyte according to claim 1, wherein the magnesium silicate has a surface area of 50 to 500 m²/g.

5. The additive for secondary battery electrolyte according to claim 1, wherein the magnesium silicate has a pore size of 0.1 to 20 nm.

6. A preparation method of an additive for secondary battery electrolyte, containing magnesium silicate, the method comprising:
(A1) preparing a silicate precursor;
(A2) preparing a mixture by mixing a magnesium precursor and an ammonium salt; and
(A3) preparing an additive for secondary battery electrolyte, containing magnesium silicate, by adding the silicate precursor to the mixture.

7. The preparation method of an additive for secondary battery electrolyte according to claim 6, wherein the (A1) consists of:
(A1a) preparing a mixed solution by mixing alcohol, water, and ammonia-water (NH₃H₂O); and
(A1b) preparing a silicate precursor having nano-sized particles by adding tetraethyl orthosilicate (TEOS) to the mixed solution.

8. The preparation method of an additive for secondary battery electrolyte according to claim 6, wherein the (A3) consists of:
(A3a) adding the silicate precursor to the mixture;
(A3b) heating the mixture to which the silicate precursor is added at 100 to 200°C; and
(A3c) preparing an additive for secondary battery electrolyte, containing magnesium silicate, by filtering the heated mixture.

9. A secondary battery electrolyte comprising an additive for secondary battery electrolyte, containing the magnesium silicate according to any one of claims 1-5.

10. The secondary battery electrolyte according to claim 9, wherein the secondary battery electrolyte comprises the additive for secondary battery electrolyte in an amount of 0.1 to 2.0% by weight based on the total weight% of the secondary battery electrolyte.

11. A secondary battery comprising the secondary battery electrolyte according to claim 9 or claim 10.
